# EUROPÄISCHE PATENTSCHRIFT

(11) **EP 3 284 881 B1**
(45) Veröffentlichungstag und Bekanntmachung des Hinweises auf die Patenterteilung: **09.03.2022**
(21) Anmeldenummer: 17186393.9
(22) Anmeldetag: 16.08.2017
(51) Int. Cl.: E04H 4/12, C02F 1/68, B65D 75/58, C02F 103/42, C02F 1/66, C02F 1/52, C02F 1/76

(54) **BEHÄLTER ZUR AUFBEWAHRUNG EINER LÖSUNG UND DOSIERSYSTEM FÜR EINE WASSERAUFBEREITUNG**
CONTAINER FOR THE STORAGE OF A SOLUTION AND DOSING SYSTEM FOR WATER TREATMENT
CONTENANT DE STOCKAGE D'UNE SOLUTION ET SYSTÈME DE DOSAGE POUR UN TRAITEMENT DE L'EAU

(30) Priorität: 18.08.2016 DE 102016215454
(43) Veröffentlichungstag der Anmeldung: 21.02.2018
(73) Patentinhaber: FWT GmbH Flamingo water technology, 99986 Langula (DE)
(72) Erfinder: HENß, Björn, 99986 Langula (DE)
(74) Vertreter: Liedtke, Markus

(56) Entgegenhaltungen:
- EP-A1- 2 163 523
- DE-A1- 1 927 765
- US-A- 4 016 079
- US-A- 6 126 361
- US-B1- 7 300 583

## Beschreibung

Die Erfindung betrifft ein Dosiersystem für eine Wasseraufbereitung.

Im Stand der Technik sind Behälter bekannt, die aus Kunststoff gebildet sind und einen nichtflexiblen Kanister bilden. Derartige bekannte Behälter werden in bekannten gattungsgemäßen Dosierungssystemen verwendet.

Die Befüllvorrichtungen sind Bestandteil eines Dosierungssystems für eine Wasseraufbereitung, insbesondere für Schwimmbecken mittlerer Baugröße, wobei zur Wasseraufbereitung eine Desinfektion des Wassers sowie optional eine pH-Wert-Korrektur und optional oder alternativ eine gezielte Flockenbildung mittels eines Flockungsmittels erfolgt, wobei gezielt hergestellte Flocken zunächst ungewollte Verunreinigungen des Wassers binden und anschließend in einem Filter aufgefangen werden. Derartige vergleichsweise große Flocken sind besser filterbar als die ungebundenen vergleichsweise kleinen Verunreinigungen.

Aus der US 2016/0017622 A1 ist ein flexibler Behälter bekannt, der mit antibakteriellen Komponenten gefüllt ist.

Aus der DE 1 517 447 sind ein Plastikfaltbeutel und ein Verfahren zur Aufbereitung von Flüssigkeit bekannt.

Aus der US 2015/0265867 A1 ist ein zylindrischer Behälter bekannt, der mit Tonerde-Granulat gefüllt ist.

Aus der DE 37 08 025 A1 ist ein wasserdichter Behälter aus flexiblem Material bekannt, der Ionenaustauschermaterial enthält und eine als Hals oder Tülle ausgebildete Öffnung umfasst.

Aus der US 2009/0266841 A1 ist ein flexibler Behälter bekannt.

Aus der US 2006/0078584 A1 ist ein feuchtigkeitsundurchlässiger Behälter bekannt, in welchem eine aus trockenen Komponenten bestehende Mischung gelagert wird.

Aus der US 2010/0006513 A1 ist ein Gerät zur Wasserbehandlung bekannt, das Sensoren umfasst.

Aus der DE 100 61 012 A1 sind ein Verfahren und eine Vorrichtung zur Flüssigkeitsfiltration bekannt, wobei die Vorrichtung Impflanzen mit Auslasstöpfen umfasst.

Aus US 7 300 583 B1 ist eine Spendervorrichtung mit einem Behälter bekannt, wobei der Behälter eine flexible, faltbare Hülle umfasst.

Aus DE 19 27 765 A1 ist eine Dosiervorrichtung bekannt.

Aus EP 2 163 523 A1 ist eine Vorrichtung zum Halogenieren von Wasser bekannt.

Aus US 6 126 361 A sind eine Vorrichtung und ein Verfahren zur Installation eines Flüssigkeitsspenders bekannt.

Aus US 4 016 079 A ist eine Steuerungsvorrichtung für Schwimmbecken bekannt. Der Erfindung liegt die Aufgabe zu Grunde, ein verbessertes Dosierungssystem anzugeben.

Die Aufgabe wird erfindungsgemäß mittels eines Dosierungssystems gemäß Anspruch 1 gelöst.

Vorteilhafte Ausgestaltungen der Erfindung sind Gegenstand der Unteransprüche.

Ein Behälter dient zur Aufbewahrung einer Lösung eines Desinfektionsmittels oder einer Lösung eines pH-Korrekturmittels oder einer Lösung eines Flockungsmittels. Der Behälter umfasst eine zumindest teilweise flexible, faltbare Hülle mit genau einer verschließbaren Öffnung zum Verschließen, Befüllen und Entleeren. Dabei ist die Hülle in einem zumindest teilweise gefalteten Auslieferungszustand mit einem Desinfektions-Granulat oder einem pH-Korrekturmittel-Granulat oder einem Flockungsmittel-Granulat gefüllt und für einen gefüllten Gebrauchszustand mit der jeweiligen Lösung füllbar, wobei die Lösung durch Zugabe von Wasser zum jeweiligen Granulat im Behälter herstellbar ist.

Unter einer flexiblen, faltbaren Hülle soll dabei eine solche Hülle verstanden werden, die fluidundurchlässig und reißfest, aber nicht, wie beispielsweise Gummi, dehnbar ist. Die Hülle ist gegenüber den von ihr aufzunehmenden Granulaten chemisch widerstandsfähig. Besonders bevorzugt ist die Hülle eine aus Kunststoff hergestellte Folie.

Durch Zugabe von Wasser zum jeweiligen Granulat ist im Behälter die Lösung herstellbar. Unter einem gefüllten Gebrauchszustand des Behälters ist ein solcher Zustand zu verstehen, in dem das Granulat vollständig aufgelöst ist und der Behälter zumindest nahezu vollständig gefüllt ist oder wird, aber kein Druck im Behälter aufgebaut wird, der zu einer ungewollten Überdehnung der Hülle führt oder führen kann. Insbesondere erfolgt die Zugabe von Wasser in einer definierten Menge, so dass das Aufnahmevermögen des Behälters nicht überschritten wird.

Der erfindungsgemäß im Dosierungssystem vorgesehene Behälter ermöglicht es, eine für eine Wasseraufbereitung zu verwendende Lösung für eine Desinfektion oder für eine pH-Wert-Korrektur oder für eine Flockung erst unmittelbar vor der jeweiligen Verwendung in einem Dosiersystem für eine Wasseraufbereitung herzustellen. Dies ist besonders vorteilhaft, da eine Verwendbarkeit der jeweiligen Lösung gegenüber dem Stand der Technik verlängert ist. Insbesondere die Bildung von ungewollten Chloraten in Desinfektionsmitteln beginnt bei Verwendung eines Behälters erst später als im Stand der Technik, so dass ein Erreichen eines zulässigen Grenzwertes erst später als im Stand der Technik erfolgt. Dadurch ist ein Dosiersystem für eine Wasseraufbereitung mit verbesserter Wirtschaftlichkeit zu betreiben.

Dadurch, dass der Behälter in seinem Auslieferungszustand mit Granulat und nicht bereits mit der fertigen Lösung gefüllt und aufgrund seiner Faltbarkeit gefaltet ist, ist der Behälter gegenüber bekannten Behältern sowohl vergleichsweise leicht als auch vergleichsweise klein. Dadurch ist auch die Auslieferung, insbesondere ein Versand einer kleinen Anzahl von Behältern an Einzelabnehmer, mit verbesserter Wirtschaftlichkeit ermöglicht.

Der Behälter weist im gefüllten Gebrauchszustand bevorzugt eine im Wesentlichen quaderförmige Gestalt auf. Dadurch ist der Behälter gut und definiert in eine Aufnahmeeinheit einer Befüllvorrichtung einsetzbar. Bevorzugt korrespondiert die Form des Behälters im gefüllten Gebrauchszustand mit der Form der Aufnahmeeinheit.

Besonders bevorzugt weist der Behälter in seinem Auslieferungszustand ebenfalls eine im Wesentlichen quaderförmige Gestalt auf, wobei die Grundfläche des Behälters in seinem Auslieferungszustand etwa gleich der Grundfläche des Behälters in seinem gefüllten Gebrauchszustand ist und wobei die Höhe des Behälters in seinem Auslieferungszustand deutlich kleiner als die Höhe des Behälters in seinem gefüllten Gebrauchszustand ist.

Der Behälter ist im Auslieferungszustand luftdicht verschließbar. Im luftdicht verschlossenen Behälter ist im Auslieferungszustand kein oder nur wenig Sauerstoff vorhanden.

Eine Ausgestaltung des Behälters sieht vor, dass im Auslieferungszustand als Desinfektions-Granulat ein Chlor-Granulat oder KPMS (Kaliumperoxomonosulfat), als pH-Korrekturmittel-Granulat ein Hydrogensulfat oder ein Hydrogenkarbonat oder als Flockungsmittel-Granulat Aluminiumhydroxychlorid eingefüllt ist.

Als Chlor-Granulat wird besonders bevorzugt Kalziumhypochlorit, Dichlorisozyanursäure oder Trichlorisozyanursäure verwendet. Als Hydrogensulfat wird besonders bevorzugt Natriumhydrogensulfat verwendet. Als Hydrogenkarbonat wird besonders bevorzugt Natriumhydrogenkarbonat verwendet. Die genannten Granulate sind zur Herstellung einer Lösung eines Desinfektionsmittels beziehungsweise einer Lösung eines pH-Korrekturmittels beziehungsweise einer Lösung eines Flockungsmittels besonders gut geeignet und als Granulat besonders stabil und haltbar, insbesondere wenn der Behälter im Auslieferungszustand luftdicht verschlossen ist und im luftdicht verschlossenen Behälter im Auslieferungszustand kein oder nur wenig Sauerstoff vorhanden ist. Insbesondere die ungewollte Bildung von Chlorat ist dadurch gegenüber einem herkömmlichen Behälter deutlich reduzierbar.

Der erfindungsgemäß im Dosierungssystem vorgesehene Behälter sieht ein die Öffnung bildendes, nichtflexibles Anschlusselement vor. Mit diesem Anschlusselement ist der Behälter besonders einfach zu verschließen und einfach fixierbar. Erfindungsgemäß weist das Anschlusselement einen Kragen und ein Gewinde auf. Das Anschlusselement ist beispielsweise aus Kunststoff gebildet.

Eine weitere Ausgestaltung des Behälters sieht vor, dass das Volumen des Behälters im Auslieferungszustand kleiner als 10 Liter ist und dass das Volumen des Behälters im gefüllten Gebrauchszustand zwischen 25 Liter und 35 Liter, insbesondere 29 bis 31 Liter beträgt. Dies ist vorteilhaft, da ein Versand im Auslieferungszustand besonders einfach möglich ist und ein Bestücken einer korrespondierenden Befüllvorrichtung eines Dosiersystems für eine Wasseraufbereitung ebenfalls besonders einfach ist.

Eine Befüllvorrichtung eines eine Entnahmevorrichtung und eine Haltevorrichtung für eine Anzahl von Behältnissen umfassenden Dosiersystems dient für eine Wasseraufbereitung. Erfindungsgemäß weist das Dosiersystem eine Anzahl von Behältern auf. Besonders bevorzugt sind zwei Behälter vorgesehen, wobei ein erster Behälter mit einem Granulat zur Herstellung einer Lösung eines Desinfektionsmittels beziehungsweise einer derartigen Lösung und ein zweiter Behälter mit einem Granulat zur Herstellung einer Lösung eines pH-Korrekturmittels beziehungsweise einer derartigen Lösung bestückt oder befüllt ist. Optional ist ein dritter Behälter mit einem Granulat zur Herstellung einer Lösung eines Flockungsmittels beziehungsweise einer derartigen Lösung vorgesehen. Das erfindungsgemäße Dosiersystem ist mit den für den Behälter genannten Vorteilen zu komplettieren.

Eine Ausgestaltung des erfindungsgemäßen Dosiersystems sieht eine Aufnahmeeinheit zur Aufnahme einer Anzahl von Behältern vor, wobei die Aufnahmeeinheit wenigstens ein Segment aufweist und wobei eine Form des Segmentes mit der Form einer Anzahl gefüllter Behälter korrespondiert. Dabei weist jedes Segment einen flüssigkeitsdurchlässigen Aufnahmeboden, ein darunter angeordnetes flüssigkeitsundurchlässiges Auffangbecken sowie eine flüssigkeitsundurchlässige Wandung auf. Das Einsetzen eines vorkonfektionierten Behälters in dessen Auslieferungszustand in ein korrespondierendes Segment ist damit besonders einfach und sicher, wodurch Bedienfehler reduzierbar oder weitestgehend vermeidbar sind. Beim anschließenden Befüllen des Behälters mit Wasser zur Bildung der Lösung vergrößert sich das Volumen des Behälters durch Entfaltung seiner Hülle, besonders bevorzugt vergrößert sich lediglich die Höhe des Behälters, und zwar so lange, bis dieser vollständig mit der sich bildenden Lösung gefüllt ist. Bevorzugt ist im Behälter so viel Granulat angeordnet, wie sich durch Wasserzugabe vollständig lösen kann, ohne dass Flüssigkeit ungewollt überläuft.

Besonders bevorzugt ist die Form eines Segmentes so gewählt, dass diese Form mit der Form eines gefüllten Behälters korrespondiert. Dann ist das Einsetzen eines Behälters in dessen Auslieferungszustand besonders einfach. Alternativ ist die Form Segmentes so gewählt, dass diese Form mit der Form mehrerer, insbesondere zweier, gefüllter Behälter korrespondiert.

Eine weitere Ausgestaltung des erfindungsgemäßen Dosiersystems sieht vor, dass die Aufnahmeeinheit eine Detektionseinheit zur Detektion eines Vorhandenseins und/oder eines Füllstandes eines Behälters aufweist. Bevorzugt ist die Detektionseinheit an einer Innenseite eines Segmentes, das zur Aufnahme genau eines Behälters ausgebildet ist, angeordnet. Der Effekt, dass sich das Volumen eines Behälters beim Befüllen vergrößert und beim Entnehmen von Lösung verkleinert, wird dabei in besonders vorteilhafter Weise zur automatischen Detektion eines Füllstandes ausgenutzt. Besonders vorteilhaft ist dabei, dass eine automatische Detektion ermöglicht ist. Zudem ist vorteilhaft, dass eine rechtzeitige Detektion einer drohenden vollständigen Entleerung möglich ist, dass also eine rechtzeitige Nachorderung oder Nachbestückung eines neuen erfindungsgemäßen Behälters in Auslieferungszustand möglich ist. Dadurch, dass die Detektionseinheit außerhalb des Behälters angeordnet ist, ist ein Wechsel eines Behälters besonders einfach möglich, außerdem ist dadurch die Detektionssicherheit besonders groß.

Bevorzugt ist ein unterer Sensor, beispielsweise ein Drucksensor, an einer Oberseite des Aufnahmebodens, auf den ein Behälter aufstellbar ist, angeordnet. Mit diesem unteren Sensor ist detektierbar, ob ein Behälter im Segment angeordnet ist. Zudem ist mit diesem unteren Sensor bei Über- oder Unterschreitung eines Grenzwertes eines Druckes detektierbar, ob ein definierter Füllstand im Behälter beim Befüllen mit Wasser erreicht ist und das Befüllen automatisch gestoppt werden kann beziehungsweise ob ein anderer definierter Füllstand im Behälter bei Entnahme einer Lösung unterschritten ist. Dadurch, dass die Hülle des erfindungsgemäßen Behälters flexibel ist, ist ein Füllstand überraschend genau zu bestimmen, wenn ein auf den unteren Sensor wirkender Druck erfasst wird.

Besonders bevorzugt ist ein oberer Sensor, beispielsweise ein Drucksensor, an einer Innenseite des der Wandung des Segmentes, in welches ein Behälter einstellbar ist, angeordnet.

Mit diesem oberen Sensor ist ebenfalls bei Über- oder Unterschreitung eines Grenzwertes eines Druckes detektierbar, ob ein definierter Füllstand im Behälter beim Befüllen mit Wasser erreicht ist und das Befüllen automatisch gestoppt werden kann beziehungsweise ob ein anderer definierter Füllstand im Behälter bei Entnahme einer Lösung unterschritten ist. Zusätzlich ist mittels des oberen Sensors eine Information zu einem Füllstand verifizierbar, die durch eine Druckerfassung durch den unteren Sensor ermittelt wurde. Dadurch, dass die Hülle des erfindungsgemäßen Behälters flexibel ist, ist ein Füllstand überraschend genau zu bestimmen oder eine dazu ermittelte Information zu verifizieren, wenn ein auf den oberen Sensor wirkender Druck erfasst wird. Es ist möglich, bei Detektion eines vorliegenden oder drohenden Leerstandes des Behälters ein automatisches Nachbestellen eines neuen Behälters in Auslieferungszustand zu generieren.

Bevorzugt umfasst die Detektionseinheit für jeden Behälter jeweils den unteren Sensor sowie den oberen Sensor. Dadurch ist ein Vorhandensein und oder ein Füllstand für jeden Behälter separat und sicher erfassbar.

Das erfindungsgemäße Dosiersystem sieht eine Fixiereinheit zur Fixierung eines im Bereich der Öffnung des Behälters angeordneten Anschlusselementes und damit zur Fixierung des Behälters vor. Das Anschlusselement ist, anders als die Hülle, nicht flexibel, so dass der Behälter genau positionierbar und leicht fixierbar ist. Die Fixiereinheit ist erfindungsgemäß winkelförmig, wobei das Anschlusselement horizontal in einen Schlitz eines horizontalen Schenkels des Anschlusselementes einsteckbar ist.

Das erfindungsgemäße Dosiersystem sieht genau eine Lanze zum Befüllen und Entleeren jeweils eines Behälters vor. Dazu sind in der Lanze eine erste und eine zweite Leitung, die zum Befüllen beziehungsweise zum Entleeren dienen, jeweils bis zum Fuß der Lanze geführt. Dadurch, dass eine Lanze sowohl zum Befüllen als auch zum Entleeren des Behälters verwendet wird, muss selbiger mit lediglich einer Öffnung ausgestattet sein. Besonders vorteilhaft ist, dass die Lanze auch eine Leitung zum Entgasen umfasst. Damit können ungewollt entstehende Gase zur Meidung eines Berstens des Behälters gezielt abgeführt werden und einem optionalen Aktivkohlefilter zugeführt werden. Erfindungsgemäß endet die Leitung zum Entgasen in einem oberen Bereich der Lanze, beispielsweise unmittelbar unter einem Schraubaufsatz derselben, mit dem die Lanze mit einem Anschlusselement des Behälters verbindbar, insbesondere verschraubbar ist.

Eine Weiterbildung dieser Ausgestaltung sieht vor, dass am unteren Ende der Lanze ein Sprühkopf angeordnet ist. Dadurch ist beim Befüllen des Behälters ein besonders effektives Auftreffen einer Anzahl von Wasserstrahlen auf das Granulat ermöglicht, so dass sich dieses sehr gut und schnell löst.

Eine Weiterbildung dieser Ausgestaltung mit Lanze sieht vor, dass zur Überwachung eines sicheren und vorschriftsmäßigen Sitzes der Lanze im Behälter oder zur Überwachung der Zuordnung der korrekten Lanze zum jeweiligen Behälter eine Überwachungsvorrichtung vorgesehen ist. Die Überwachungsvorrichtung erfolgt bevorzugt nach einem RFID-Prinzip. Beispielsweise ist, je nach eingefülltem Granulat, ein bestimmter Transponder am oder im Behälter angebracht, welcher Informationen zum eingefüllten Granulat speichert und weitergeben kann. An der Lanze oder an einem Anschlussteil kann eine korrespondierende Leseeinrichtung angebracht sein. Damit kann auf einfache Weise sichergestellt werden, dass nur vom jeweiligen Hersteller freigegebene Behälter in deren Auslieferungszustand verwendbar sind.

Das erfindungsgemäße Dosiersystem sieht vor, dass die Lanze mittels der Fixiereinheit fixierbar ist. Dadurch ist eine Montage der Lanze insbesondere beim Bestücken des Dosiersystems mit einem neuen Behälter besonders einfach und sicher möglich. Insbesondere ist es möglich sicherzustellen, dass die in einen neu eingesetzten Behälter eingeführte Lanze mit ihrem unteren Ende in einer definierten Höhe, beispielsweise knapp über dem Granulat, fixiert ist, wodurch das Lösen des Granulates besonders sicher und vor allem in vorbestimmter Weise und damit mit wiederholbarer, konstanter Qualität bei Verwendung von vorkonfektionierten Behältern gleicher Konstruktionsweise erfolgt.

Das erfindungsgemäße Dosiersystem sieht vor, dass der Schlitz des horizontalen Schenkels der Fixiereinheit eine Breite aufweist, die geringfügig kleiner ist als die Breite eines Kragens des Anschlusselements. Dadurch ist das Anschlusselement einfach in horizontaler Richtung in den Schlitz einschiebbar und der Kragen auf den horizontalen Winkel aufsetzbar, so dass der Behälter einfach in das Dosiersystems einsetzbar und fixierbar und einfach aus diesem entnehmbar ist. Das Anschlusselement ist also in den Schlitz einschiebbar und dort zumindest in vertikaler Richtung fixiert. Bevorzugt ist das Anschlusselement zusätzlich in horizontaler Richtung durch Klemmung fixierbar, wozu die Breite des Schlitzes im horizontalen Schenkel mit der Breite, insbesondere dem Außendurchmesser, des Anschlusselements unmittelbar unterhalb des Kragens korrespondiert, also etwa gleich groß ist. Es ist alternativ auch möglich, dass die Breite des Schlitzes im horizontalen Schenkel etwas größer ist als die Breite, insbesondere der Außendurchmesser, des Anschlusselements unmittelbar unterhalb des Kragens.

Ausführungsbeispiele der Erfindung werden im Folgenden anhand von Zeichnungen näher erläutert.

Darin zeigen:
- Figur 1: eine schematische Darstellung einer ersten Ausführungsform eines Behälters im Gebrauchszustand,
- Figur 2: eine zugehörige auszugsweise vergrößerte Detaildarstellung,
- Figur 3: eine Ausführungsform eines Behälters im Auslieferungszustand,
- Figur 4: ein erfindungsgemäßes Dosiersystem für eine Wasseraufbereitung in einer ersten Ausführungsform mit der ersten Ausführungsform der Behälter in schematischer Darstellung,
- Figur 5: eine schematische Seitenansicht eines erfindungsgemäßen Dosiersystems für eine Wasseraufbereitung in einer weiteren Ausführungsform mit der ersten Ausführungsform eines Behälters,
- Figur 6: eine zugehörige perspektivische Untersicht und
- Figur 7: eine perspektivische Ansicht eines eine Fixiereinheit bildenden Winkels.

Einander entsprechende Teile sind in allen Figuren mit den gleichen Bezugszeichen versehen.

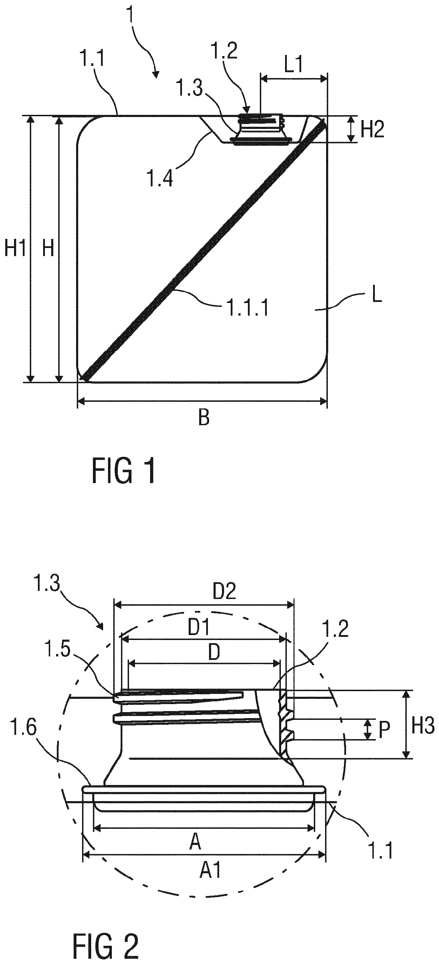

**Figur 1** zeigt eine schematische Darstellung einer ersten Ausführungsform eines Behälters 1 in einem Gebrauchszustand. Der Behälter 1 dient zur Aufbewahrung einer Lösung L eines Desinfektionsmittels oder eines pH-Korrekturmittels oder eines Flockungsmittels. Der Behälter 1 weist eine flexible, faltbare Hülle 1.1 und genau eine verschließbare Öffnung 1.2 auf, wobei die Öffnung 1.2 zum Verschließen, Befüllen und Entleeren dient. Die Hülle 1.1 ist in einem entfalteten Zustand dargestellt, in welchem der Behälter 1 bereits mit einer der vorgenannten Lösungen befüllt ist. In einem hier nicht gezeigten, zumindest teilweise gefalteten Auslieferungszustand ist der Behälter 1 mit einem hier bereits aufgelösten und daher nicht gezeigten Granulat 2 zur Desinfektion, zur pH-Korrektur beziehungsweise zur Flockung gefüllt. Die Lösung L wurde durch Zugabe von

Wasser zum Granulat 2 hergestellt. Die Hülle 1.1 ist aus zwei Hälften gebildet, die mittels einer Schweißnaht 1.1.1 miteinander fluiddicht verbunden sind.

Die Öffnung 1.2 wird durch ein nichtflexibles Anschlusselement 1.3 gebildet, das aus Kunststoff besteht. Das Anschlusselement 1.3 ist in einer Vertiefung 1.4 der Hülle 1.1 angeordnet.

Die gezeigte Ausführungsform des Behälters 1, bei der das Anschlusselement 1.3 nicht herausgezogen, also nicht mit der Vertiefung 1.4 herausgestülpt ist, weist die folgenden Parameter auf, die bei weiteren, strukturell gleichen oder strukturell modifizierten Ausführungsformen anders sein können:
Nenninhalt: 30 Liter
Höhe H: 333 mm
Gesamthöhe H1: 335 mm
Muldentiefe H2: 33 mm
Breite B: 333 mm
Stutzenabstand L1: 88 mm.

Parameter eines Behälters 1 können beispielsweise um +/- 5% von den genannten Parametern abweichen.

Der Behälter 1 ist vorkonfektioniert, das heißt, seine Abmessungen sind so gewählt, dass er einfach in eine hier nicht gezeigte Befüllvorrichtung mit korrespondierenden Abmessungen einsetzbar ist.

**Figur 2** zeigt eine zugehörige auszugsweise vergrößerte Detaildarstellung des mit der Hülle 1.1 fluiddicht verbundenen Anschlusselementes 1.3, welches ein äußeres Gewinde 1.5 und einen umlaufenden Kragen 1.6 aufweist. Optional kann ein Spannring vorgesehen sein.

Die gezeigte Ausführungsform des Anschlusselementes 1.3 weist die folgenden Parameter auf, die bei weiteren, strukturell gleichen oder strukturell modifizierten Ausführungsformen des Anschlusselementes 1.3 anders sein können:
Spannringdurchmesser A: 75,5 mm
Spannringdurchmesser A1: 82,5 mm
Öffnungsdurchmesser D: 49,7 mm
Gewindekerndurchmesser D1: 54,9 mm
Gewindenenndurchmesser D2: 60 mm
Gewindesteigung P: 6,35 mm.

Parameter eines Anschlusselementes 1.3 können beispielsweise um +/- 5% oder um +/- 1% von den genannten Parametern abweichen.

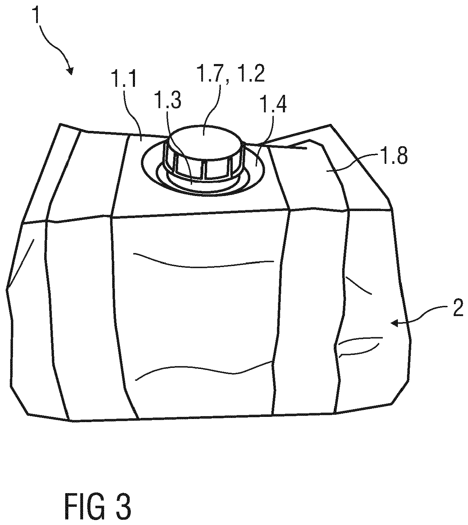

**Figur 3** zeigt eine schematische Darstellung des Behälters 1 in einem Auslieferungszustand, in welchem ein Granulat 2 eingefüllt ist. Im Behälter 1 befindet sich außer dem Granulat 2 kaum Luft, da der Behälter 1 optional evakuierbar ist. Die vom Anschlusselement 1.3 gebildete Öffnung 1.2 ist mittels einer Verschlusskappe 1.7 luftdicht verschlossen. Die weitgehend zusammengefaltete Hülle 1.1 ist zur Formfixierung des Behälters 1 in dessen Auslieferungszustand mittels eines Fixierbandes 1.8 verklebt, welches vor der Verwendung des Behälters 1 entfernt wird.

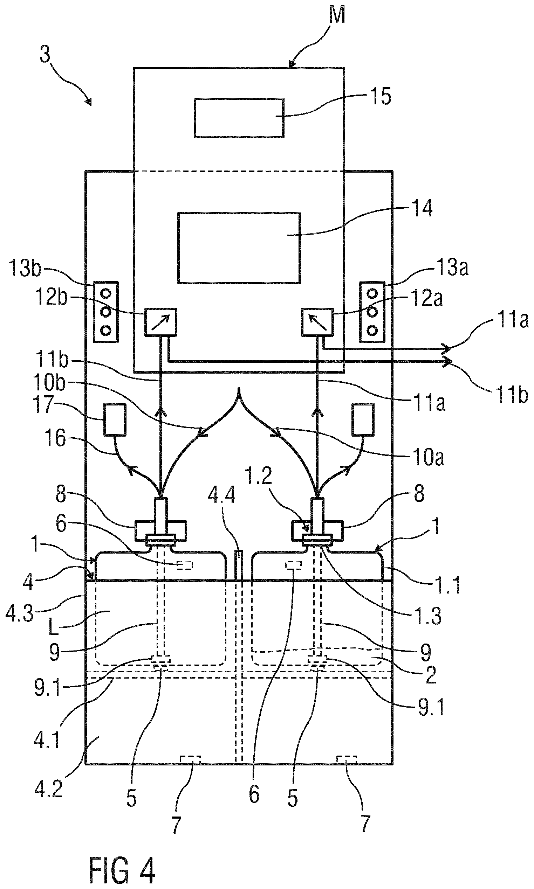

**Figur 4** zeigt eine Anordnung einer Ausführungsform zweier Behälter 1 in einer ersten Ausführungsform eines erfindungsgemäßen Dosiersystems 3 für eine Wasseraufbereitung. Das Dosiersystem für die Wasseraufbereitung umfasst außer der Befüllvorrichtung eine bekannte Mess- und Regeleinheit M, eine Entnahmevorrichtung zur Entnahme einer Lösung L sowie eine Haltevorrichtung zur Aufnahme und Fixierung der beiden Behälter 1.

Ein Behälter 1 dient zur Aufbewahrung einer Lösung eines Desinfektionsmittels, der zweite Behälter 1 dient zur Aufbewahrung einer Lösung eines pH-Korrekturmittels.

Das Dosiersystem 3 dient der Wasseraufbereitung, insbesondere für Schwimmbecken mittlerer Baugröße, wobei zur Wasseraufbereitung eine Desinfektion des Wassers sowie eine pH-Wert-Korrektur erfolgen.

Mittels der Befüllvorrichtung wurden die zunächst mit Granulat 2 gefüllten Behälter 1 mit Wasser aufgefüllt, wobei in einem Behälter 1 eine Lösung L zur Desinfektion des Wassers und in dem zweiten Behälter 1 eine Lösung L für eine pH-Wert-Korrektur des Wassers hergestellt wurde.

Mittels des Dosiersystems 3 wird dem aufzubereitenden Wasser je nach ermitteltem Bedarf eine Dosis der Lösung L zur Desinfektion und/oder eine Dosis der Lösung L für eine pH-Wert-Korrektur des Wassers zugegeben. Dazu weist das Dosiersystem 3 eine Entnahmevorrichtung auf.

Die Ermittlung des Bedarfes und die Regelung der Dosierung erfolgt mittels einer Mess- und Regeleinheit M.

Die Behälter 1 sind in einer Haltevorrichtung angeordnet, welche Bestandteil des Dosiersystems 3 ist. Die Haltevorrichtung umfasst eine Aufnahmeeinheit 4, welche für jeden Behälter 1 einen fluiddurchlässigen Aufnahmeboden 4.1 zum Aufstellen des Behälters 1 aufweist, ein unter den Aufnahmeböden 4.1 angeordnetes Auffangbecken 4.2, Wandungen 4.3 zur seitlichen Begrenzung der Behälter 1 sowie eine zwischen den Behältern angeordnete Trennwand 4.4. Das Auffangbecken 4.2 dient dazu, eine aus einem Behälter 1 ungewollt auslaufende Lösung aufzufangen. Die Aufnahmeeinheit 4 weist also zwei Segmente auf, deren Form jeweils mit der Form eines gefüllten Behälters 1 korrespondiert.

Auf der Oberseite jedes Aufnahmebodens 4.1 ist ein unterer Sensor 5 angeordnet, in jeweils einem oberen Bereich der Wandung 4.3 ist ein oberer Sensor 6 angeordnet. Die Sensoren 5,6 dienen der Detektion eines Vorhandenseins und/oder eines Füllstandes eines Behälters 1. Beide Sensoren 5,6 sind also an einer Innenseite eines Segmentes angeordnet. Der Effekt, dass sich das Volumen eines Behälters 1 beim Befüllen vergrößert und beim Entnehmen von Lösung L verkleinert, wird dabei zur automatischen Detektion des Füllstandes mittels des oberen Sensors 6 ausgenutzt. Eine rechtzeitige Detektion einer drohenden vollständigen Entleerung ist dadurch möglich, so dass eine rechtzeitige Nachbestückung mit einem neuen Behälter 1 in Auslieferungszustand möglich ist. Am Boden des Auffangbeckens 4.2 ist ein Leckagesensor 7 angeordnet, mittels welchem ein ungewolltes Auslaufen eines Behälters 1 detektiert werden kann, wobei optional ein Warnsignal ausgebbar ist und optional ein Betrieb des Dosiersystems 3 automatisch unterbrechbar ist.

Die Befüllvorrichtung umfasst eine Fixiereinheit 8, die als abnehmbarer Metall-Winkel ausgebildet ist. Mittels der Fixiereinheit 8 ist ein Behälter 1 an der Rückwand fixierbar. Ein horizontaler Schenkel weist einen Schlitz auf, in welchen das Anschlusselement 1.3 einschiebbar ist.

In jedem Behälter 1 ist eine Lanze 9 angeordnet, an deren Fuß sich ein Sprühkopf 9.1 befindet. Die Lanze 9 weist an ihrer Oberseite ein Verschraubungselement auf, mit welchem die Lanze 9 durch Verschraubung mit dem Gewinde 1.5 des Anschlusselementes 1.3 an der Fixiereinheit 8 befestigbar und fixierbar ist. Dadurch ist die Lage des Behälters 1 sowie der Lanze 9 festgelegt. Die Lanze 9 umfasst eine bis zum Sprühkopf 9.1 geführte Leitung zum Befüllen mit Wasser, eine bis etwa auf den Boden des Behälters 1 geführte Leitung zur Entnahme der fertigen Lösung L sowie eine knapp unterhalb des Anschlusselementes 1.3 endende Leitung zur Abführung ungewollt entstehender Gase. Der Sprühkopf 9.1 dient der gezielten Einleitung von Wasser mit hoher Geschwindigkeit und damit einem verbesserten und definierten Auflösen des Granulates 2.

Oberhalb der Behälter 1 sind eine erste Füllleitung 10a für den ersten Behälter 1 und eine zweite Füllleitung 10b für den zweiten Behälter 1 angeordnet und jeweils mit der Lanze 9 verbunden. Durch die Füllleitungen 10a, 10b wird zur Bildung der jeweiligen Lösung L Wasser in den jeweiligen Behälter 1 eingefüllt, nachdem dieser im Auslieferungszustand eingesetzt wurde.

Oberhalb der Behälter 1 sind eine erste Entnahmeleitung 11a für den ersten Behälter 1 und eine zweite Entnahmeleitung 11b für den zweiten Behälter 1 angeordnet und jeweils mit der Lanze 9 verbunden. Durch die Entnahmeleitungen 11a, 11b wird die jeweilige Lösung L aus dem jeweiligen Behälter 1 in vorgegebener Menge entnommen. Dazu sind eine erste Dosierpumpe 12a und eine zweite Dosierpumpe 12b vorgesehen, welche bevorzugt von der Mess- und Regeleinheit M umfasst sind.

Mittels einer ersten Steuerungseinheit 13a wird das Befüllen des rechts dargestellten Behälters 1 gesteuert. Diese erste Steuerungseinheit 13a umfasst auch ein Eingabefeld für einen manuell auszulösenden Befüllvorgang für den rechts dargestellten Behälter 1. Mittels einer zweiten Steuerungseinheit 13b wird das Befüllen des links dargestellten Behälters 1 gesteuert. Diese zweite Steuerungseinheit 13b umfasst ebenfalls ein Eingabefeld für einen manuell auszulösenden Befüllvorgang für den links dargestellten Behälter 1.

Die Mess- und Regeleinheit M, welches als separates und wechselbares Bauteil ausgeführt ist, umfasst neben der ersten Dosierpumpe 12a und der zweiten Dosierpumpe 12b Messzellen/Elektroden 14 zur Analyse des aufzubereitenden Wassers und damit zur Ermittlung des Bedarfes an Desinfektionsmittel und pH-Wert-Korrekturmittel sowie ein Display 15 zur Anzeige verschiedener Werte, die die Aufbereitung betreffen. Das Display oder eine separate Eingabeeinheit dienen optional zudem zur Einstellung diverser Parameter zur Wasseraufbereitung.

Am oberen Ende der Lanze 9 ist eine Entgasungsleitung 16 angeordnet, mittels derer ungewollt im Behälter 1 entstehende Gase abführbar sind, um ein Aufblähen oder Bersten des Behälters 1 zu vermeiden. Das von der Entgasungsleitung 16 abgeführte Gas wird in einen Aktivkohlefilter 17 geleitet, in welchem es weitestgehend gereinigt wird.

Das Dosiersystem 3 ist als auf einen Boden aufstellbare Anlage ausgebildet, welche optional auch an einer nicht gezeigten Wand montierbar ist.

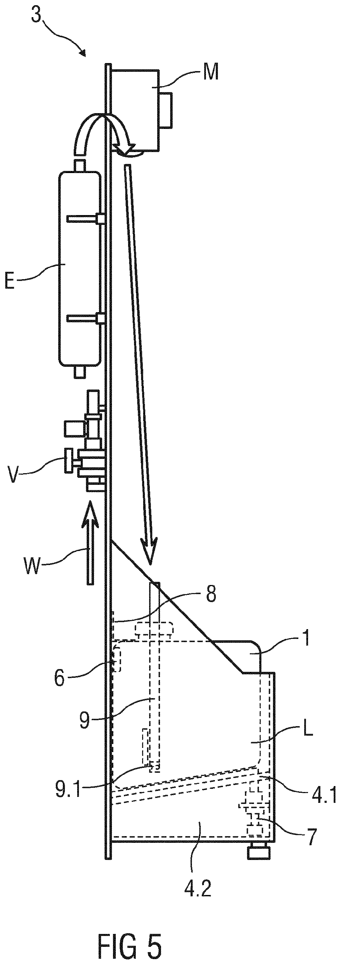

**Figur 5** zeigt eine schematische Seitenansicht einer Ausführungsform eines erfindungsgemäßen Dosiersystems 3 für eine Wasseraufbereitung mit der ersten Ausführungsform der Behälter 1. Der mit einer Lösung L gefüllte Behälter 1 ist auf dem Aufnahmeboden 4.1 aufgestellt. An einer Rückwand der Dosiersystem 3 ist der obere Sensor 6 angeordnet. Im Auffangbecken 4.2 ist der Leckagesensor 7 gezeigt. Die als abnehmbarer Metall-Winkel ausgebildete Fixiereinheit 8 ist ebenfalls an dieser Rückwand angeordnet. Mittels der Fixiereinheit 8 sind sowohl der Behälter 1 als auch die darin eingesetzte Lanze 9, die am Fuß einen Sprühkopf 9.1 aufweist, fixiert. Oberhalb des Behälters 1 ist die Mess- und Regeleinheit M an der Vorderseite der Rückwand befestigt. An der Rückseite der Rückwand befinden sich ein Ventil V sowie eine Enthärtungskartusche E, die der Verbesserung eines mittels eines Wasserzulaufs W einzuströmenden Wassers dient. Mit dem Ventil V kann der Wasserzulauf W geöffnet oder geschlossen werden. Die Enthärtungskartusche E weist optional eine Anzeige auf, mit welcher eine abnehmende Wirksamkeit visuell, insbesondere durch eine Farbänderung, sichtbar gemacht wird.

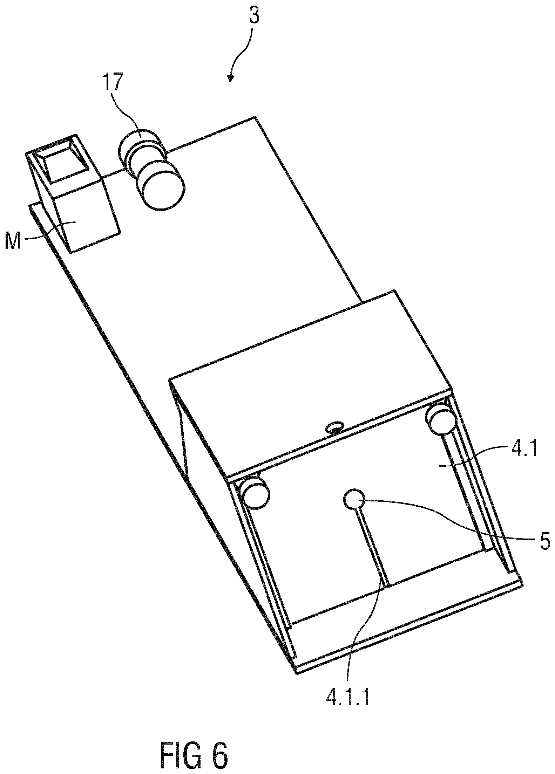

**Figur 6** zeigt eine teilweise Untersicht einer Befüllvorrichtung für ein Dosiersystem 3, die zur Aufnahme genau eines Behälters 1 ausgelegt ist, wobei das Auffangbecken 4.2 hier nicht gezeigt ist. Das Dosiersystem 3 dient der Zugabe eines Flockungsmittels. Der an dem Aufnahmeboden 4.1 angeordnete untere Sensor 5 ist mit einem Kabel 4.1.1 am Steuerungssystem der Befüllvorrichtung verbunden. An der Vorderseite der Rückwand ist neben der Mess- und Regeleinheit M ein Aktivkohlefilter 17 gezeigt. Bei dieser Ausführungsform umfasst die Mess- und Regeleinheit M eine Dosierpumpe, mit welcher eine Zugabe des Flockungsmittels zeitgeregelt oder mengengeregelt wird.

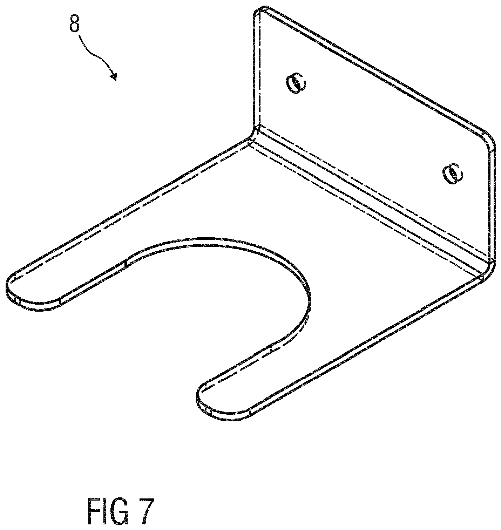

**Figur 7** zeigt eine Ausführungsform der Fixiereinheit 8, die von der Befüllvorrichtung umfasst ist. Die Fixiereinheit 8 ist als abnehmbarer Metall-Winkel ausgebildet. Mittels der Fixiereinheit 8 ist ein hier nicht gezeigter Behälter 1 an der Rückwand fixierbar. Ein horizontaler Schenkel weist einen Schlitz auf, in welchen das hier nicht gezeigte Anschlusselement 1.3 einschiebbar ist. Der äußere Durchmesser des hier nicht gezeigten Kragens 1.6, welcher in Figur 2 gezeigt ist, ist etwas größeren auf als die Breite des Schlitzes im horizontalen Schenkel, so dass das Anschlusselement 1.3 in den Schlitz einschiebbar und dort zumindest in vertikaler Richtung fixiert ist. Bevorzugt ist das Anschlusselement 1.3 zusätzlich in horizontaler Richtung zur Klemmung fixierbar, wozu die Breite des Schlitzes im horizontalen Schenkel mit der Breite, insbesondere dem Außendurchmesser, des Anschlusselements 1.3 unmittelbar unterhalb des Kragens 1.6 korrespondiert.

Optional ist der Metall-Winkel von der Rückwand abnehmbar, wozu bevorzugt eine Verbindung zwischen Metall-Winkel und Rückwand werkzeuglos lösbar ist. Dadurch kann erforderlichenfalls auch ein gefüllter Behälter 1 gemeinsam mit der Fixiereinheit 8 wieder aus der Aufnahmeeinheit 4 entnommen werden, nachdem der Metall-Winkel von der Rückwand gelöst wurde.

### BEZUGSZEICHENLISTE

- 1: Behälter
- 1.1: Hülle
- 1.1.1: Schweißnaht
- 1.2: Öffnung
- 1.3: Anschlusselement
- 1.4: Vertiefung
- 1.5: Gewinde
- 1.6: Kragen
- 1.7: Verschlusskappe
- 1.8: Fixierband
- 2: Granulat
- 3: Dosiersystem
- 4: Aufnahmeeinheit
- 4.1: Aufnahmeboden
- 4.1.1: Kabel
- 4.2: Auffangbecken
- 4.3: Wandung
- 4.4: Trennwand
- 5: unterer Sensor
- 6: oberer Sensor
- 7: Leckagesensor
- 8: Fixiereinheit
- 9: Lanze
- 9.1: Sprühkopf
- 10a: erste Füllleitung
- 10b: zweite Füllleitung
- 11a: erste Entnahmeleitung
- 11b: zweite Entnahmeleitung
- 12a: erste Dosierpumpe
- 12b: zweite Dosierpumpe
- 13a: erste Steuerungseinheit
- 13b: zweite Steuerungseinheit
- 14: Messzellen/Elektroden
- 15: Display
- 16: Entgasungsleitung
- 17: Aktivkohlefilter

- M: Mess- und Regeleinheit
- L: Lösung
- E: Enthärtungskartusche
- V: Ventil
- W: Wasserzulauf

## Patentansprüche

1. Dosiersystem (3) für eine Wasseraufbereitung, wobei das Dosiersystem (3) eine Befüllvorrichtung, eine Entnahmevorrichtung und eine Haltevorrichtung für eine Anzahl von Behältnissen umfasst,
**gekennzeichnet durch**
- eine Anzahl von Behältern (1), wobei jeder Behälter (1) zur Aufbewahrung einer Lösung eines Desinfektionsmittels oder einer Lösung eines pH-Korrekturmittels oder einer Lösung eines Flockungsmittels ausgebildet ist,
wobei der Behälter (1) eine flexible, faltbare Hülle (1.1) und genau eine Öffnung (1.2) zum Verschließen, Befüllen und Entleeren umfasst, wobei die Öffnung (1.2) verschließbar ist,
wobei ein die Öffnung (1.2) bildendes, nichtflexibles Anschlusselement (1.3) mit einem Gewinde (1.5) und einem Kragen (1.6) vorgesehen ist,
wobei das Gewinde (1.5) ein Außengewinde ist und
wobei sich die Hülle (1.1) in einem zumindest teilweise gefalteten Auslieferungszustand befindet, in welchem sie mit einem Desinfektions-Granulat oder einem pH-Korrekturmittel-Granulat oder einem Flockungsmittel-Granulat gefüllt ist und für einen gefüllten Gebrauchszustand mit der jeweiligen Lösung füllbar ist, wobei die Lösung durch Zugabe von Wasser zum jeweiligen Granulat herstellbar ist,
- eine Fixiereinheit (8) zur Fixierung eines im Bereich der Öffnung (1.2) des Behälters (1) angeordneten Anschlusselementes (1.3), wobei die Fixiereinheit (8) winkelförmig ist, wobei das Anschlusselement (1.3) horizontal in einen Schlitz eines horizontalen Schenkels Fixiereinheit (8) einsteckbar ist,
wobei der Schlitz des horizontalen Schenkels der Fixiereinheit (8) eine Breite aufweist, die kleiner ist als die Breite des Kragens (1.6) des Anschlusselements (1.3) und
- genau eine Lanze (9) zum Befüllen und Entleeren eines Behälters (1), wobei die Lanze (9) mittels der Fixiereinheit (8) fixierbar ist und wobei in der Lanze (9) eine erste und eine zweite Leitung, die zum Befüllen beziehungsweise zum Entleeren dienen, jeweils bis zum Fuß der Lanze (9) geführt ist und wobei die Lanze (9) eine weitere Leitung zum Entgasen umfasst, welche in einem oberen Bereich der Lanze (9) endet.

2. Dosiersystem (3) nach Anspruch 1, **dadurch gekennzeichnet,**
**dass** im Behälter (1) in dessen Auslieferungszustand als Desinfektions-Granulat (2a) ein Chlor-Granulat oder KPMS (Kaliumperoxomonosulfat), als pH-Korrekturmittel-Granulat (2b) ein Hydrogensulfat oder ein Hydrogenkarbonat oder als Flockungsmittel-Granulat (2c) Aluminiumhydroxychlorid eingefüllt ist.

3. Dosiersystem (3) nach Anspruch 1 oder 2,
**gekennzeichnet durch** eine Aufnahmeeinheit (4) zur Aufnahme einer Anzahl von Behältern (1), wobei die Aufnahmeeinheit (4) ein Segment aufweist, wobei eine Form des Segmentes mit der Form einer Anzahl gefüllter Behälter (1) korrespondiert und wobei jedes Segment einen flüssigkeitsdurchlässigen Aufnahmeboden (4.1), ein darunter angeordnetes flüssigkeitsundurchlässiges Auffangbecken (4.2) sowie eine flüssigkeitsundurchlässige Wandung (4.3) aufweist.

4. Dosiersystem (3) nach einem der vorhergehenden Ansprüche, **dadurch gekennzeichnet,**
**dass** die Aufnahmeeinheit (4) eine Detektionseinheit zur Detektion eines Vorhandenseins und eines Füllstandes eines Behälters (1) aufweist.

5. Dosiersystem (3) nach Anspruch 4, **dadurch gekennzeichnet,**
**dass** die Detektionseinheit zumindest für jeden Behälter (1) jeweils einen unteren Sensor (5) sowie einen oberen Sensor (6) umfasst.

6. Dosiersystem (3) nach einem der vorhergehenden Ansprüche, **dadurch gekennzeichnet, dass** am unteren Ende der Lanze (9) ein Sprühkopf (9.1) angeordnet ist.

7. Dosiersystem (3) nach einem der vorhergehenden Ansprüche, **dadurch gekennzeichnet, dass** die Fixiereinheit (8) als von einer Rückwand abnehmbarer Metall-Winkel ausgebildet ist.

## Claims

1. Dosing system (3) for water treatment, wherein the dosing system (3) comprises a filling device, a removal device and a holding device for a number of containers,
**characterized by**
- a number of containers (1), wherein each container (1) is designed for storing a solution of a disinfectant or a solution of a pH correction agent or a solution of a flocculating agent,
wherein the container (1) comprises a flexible, foldable casing (1.1) and exactly one opening (1.2) for closing, filling and emptying, wherein the opening (1.2) is closable,
wherein a non-flexible connection element (1.3) forming the opening (1.2) is provided with a thread (1.5) and a collar (1.6),
wherein the thread (1.5) is an external thread, and
wherein the casing (1.1) is in an at least partially folded delivery state in which it has been filled with disinfection granules or pH correction agent granules or flocculating agent granules and is fillable with the respective solution for a filled use state, wherein the solution is producible by adding water to the respective granules,
- a fixing unit (8) for fixing a connection element (1.3) arranged in the region of the opening (1.2) of the container (1), wherein the fixing unit (8) is angular, wherein the connection element (1.3) is horizontally insertable into a slot of a horizontal leg fixing unit (1),
wherein the slot of the horizontal leg of the fixing unit (8) has a width which is less than the width of the collar (1.6) of the connection element (1.3), and
- exactly one lance (9) for filling and emptying a container (1), wherein the lance (9) is fixable by means of the fixing unit (8), and wherein, in the lance (9), a first and a second line, which serve for filling or for emptying, are each led to the foot of the lance (9), and wherein the lance (9) comprises a further line for degassing that terminates in an upper region of the lance (9).

2. Dosing system (3) according to Claim 1, **characterized in that** the container (1) in its delivery state has been filled with chlorine granules or PPMS (potassium peroxymonosulfate) as disinfection granules (2a), with a hydrogen sulfate or a hydrogen carbonate as pH correction agent granules (2b) or with aluminium hydroxy chloride as flocculating agent granules (2c).

3. Dosing system (3) according to Claim 1 or 2,
**characterized by** a receiving unit (4) for receiving a number of containers (1), wherein the receiving unit (4) has a segment, wherein a shape of the segment corresponds to the shape of a number of filled containers (1), and wherein each segment has a liquid-permeable receiving bottom (4.1), a liquid-impermeable collecting basin (4.2) arranged therebelow, and a liquid-impermeable wall (4.3).

4. Dosing system (3) according to one of the preceding claims, **characterized in that** the receiving unit (4) has a detection unit for detecting a presence and a filling level of a container (1).

5. Dosing system (3) according to Claim 4, **characterized in that** the detection unit comprises, at least for each container (1), a respective lower sensor (5) and an upper sensor (6).

6. Dosing system (3) according to one of the preceding claims, **characterized in that** a spray head (9.1) is arranged at the lower end of the lance (9).

7. Dosing system (3) according to one of the preceding claims, **characterized in that** the fixing unit (8) is designed as a metal angle bracket detachable from a rear wall.

## Revendications

1. Système de dosage (3) destiné au traitement de l'eau, le système de dosage (3) comprenant un dispositif de remplissage, un dispositif de retrait et un dispositif de retenue destinés à un certain nombre de récipients, **caractérisé par**
- un certain nombre de récipients (1), chaque récipient (1) étant conçu pour contenir une solution d'un agent de désinfection ou une solution d'un agent de correction de pH ou une solution d'un agent floculant, le récipient (1) comprenant une enveloppe flexible pliable (1.1) et exactement une ouverture (1.2) destinée à la fermeture, au remplissage et au vidage, l'ouverture (1.2) pouvant être fermée,
un élément de raccordement non flexible (1.3) étant prévu qui forme l'ouverture (1.2) et qui comporte un filetage (1.5) et un rebord (1.6),
le filetage (1.5) étant un filetage externe et
l'enveloppe (1.1) se trouvant dans un état de livraison au moins partiellement plié dans lequel elle est remplie d'un granulat de désinfection ou d'un granulat de correction de pH ou d'un granulat floculant et peut être remplie de la solution respective pour un état d'utilisation rempli,
la solution pouvant être préparée par ajout d'eau au granulat respectif,
- une unité de fixation (8) destinée à fixer un élément de raccordement (1.3) disposé au niveau de l'ouverture (1.2) du récipient (1), l'unité de fixation (8) étant de forme angulaire, l'élément de raccordement (1.3) pouvant être inséré horizontalement dans une fente d'une branche horizontale de l'unité de fixation (8), la fente de la branche horizontale de l'unité de fixation (8) ayant une largeur qui est inférieure à la largeur du rebord (1.6) de l'élément de raccordement (1.3) et
- exactement une lance (9) destinée à remplir et vider un récipient (1), la lance (9) pouvant être fixée au moyen de l'unité de fixation (8) et une première et une deuxième conduite, qui servent respectivement au remplissage et au vidage, étant guidées dans la lance (9) jusqu'au pied de la lance (9), et la lance (9) comprenant une autre conduite destinée au dégazage qui se termine dans une région supérieure de la lance (9).

2. Système de dosage (3) selon la revendication 1, **caractérisé en ce que** le récipient (1) à l'état de livraison est rempli d'un granulat chloré ou de peroxomonosulfate de potassium (KPMS) comme granulat de désinfection (2a), d'un hydrogénosulfate ou d'un hydrogénocarbonate comme granulat de correction de pH (2b) ou d'hydroxychlorure d'aluminium comme granulat floculant (2c).

3. Système de dosage (3) selon la revendication 1 ou 2,
**caractérisé par** une unité de réception (4) destinée à recevoir un certain nombre de récipients (1), l'unité de réception (4) comportant un segment, une forme du segment correspondant à la forme d'un certain nombre de récipients remplis (1) et chaque segment comportant un fond de réception perméable aux liquides (4.1), un bassin collecteur imperméable aux liquides (4.2) disposé au-dessous et une paroi imperméable aux liquides (4.3).

4. Système de dosage (3) selon l'une des revendications précédentes, **caractérisé en ce que**
l'unité de réception (4) comporte une unité de détection destinée à détecter la présence et le niveau de remplissage d'un récipient (1).

5. Système de dosage (3) selon la revendication 4, **caractérisé en ce que** l'unité de détection comprend au moins pour chaque récipient (1) un capteur inférieur (5) et un capteur supérieur (6).

6. Système de dosage (3) selon l'une des revendications précédentes, **caractérisé en ce qu'**une tête de pulvérisation (9.1) est disposée à l'extrémité inférieure de la lance (9).

7. Système de dosage (3) selon l'une des revendications précédentes, **caractérisé en ce que** l'unité de fixation (8) est réalisée sous la forme d'une cornière métallique pouvant être retirée d'une paroi arrière.
